# EUROPEAN PATENT SPECIFICATION

(11) **EP 1 651 054 B1**
(45) Date of publication and mention of the grant of the patent: **30.06.2010**
(21) Application number: 04774861.1
(22) Date of filing: 04.08.2004
(51) Int. Cl.: A21D 13/00, A21B 3/13, A47J 37/01

(54) **BAKING TIN, EDIBLE BAKED PRODUCT AND METHOD FOR THE PREPARATION THEREOF**
BACKFORM, ESSBARES BACKPRODUKT UND HERSTELLUNGSVERFAHREN DAFÜR
MOULE, PRODUIT COMESTIBLE CUIT AU FOUR ET PROCEDE DE PREPARATION ASSOCIE

(30) Priority: 05.08.2003 NL 1024047
(43) Date of publication of application: 03.05.2006
(73) Proprietor: Teeuwen, Gerardus Leonardus Mathieu, 6041 CW Roermond (NL)
(72) Inventor: Teeuwen, Gerardus Leonardus Mathieu, 6041 CW Roermond (NL)
(74) Representative: van Westenbrugge, Andries
(86) International application number: PCT/NL2004/000553
(87) International publication number: WO 2005/011388

(56) References cited:
- DE-A- 4 208 382
- DE-A- 19 618 545
- DE-U- 20 021 892
- FR-A- 2 358 861
- PATENT ABSTRACTS OF JAPAN vol. 1998, no. 10, 31 August 1998 (1998-08-31) -& JP 10 117667 A (KOWA KOGYO:KK), 12 May 1998 (1998-05-12)
- PATENT ABSTRACTS OF JAPAN vol. 2000, no. 13, 5 February 2001 (2001-02-05) -& JP 2000 300152 A (HIRANO SHIKI:KK), 31 October 2000 (2000-10-31)

## Description

The invention relates to an edible product, comprising a body consisting of an edible material, said body having a crusty surface that has been obtained by heating, said surface comprising a top, bottom and periphery, one of the sides of the surface having an undulating shape. Such an undulating shape is known from DE 19618545 A1 disclosing two cooperating moulds defining a closed cavity for waffle dough.

The undulating shape provides the product according to the invention with an extra large crusty surface, which is generally appreciated by the consumer. Nevertheless, the content, and thus the quantity of starting material that is needed to prepare the product, remains virtually the same, so that a higher quality and greater appreciation can be obtained at the same cost. This is also beneficial from the commercial standpoint.

The undulating shape can be made in a wide variety of different ways. For instance, as an example, the undulating shape can be on the top of the surface. Such surface, or another surface, can have an undulating shape with at least two peaks and, for example, at most ten peaks.

The undulating shape can extend over the entire side of the product. However, it is also possible to provide a break in such a side. The provision of a cavity in a roll or other bakery product is mentioned as an example. A filling, for example a sweet or savoury filling, can be accommodated in such a cavity. It must be understood that the size of the product can vary from a bite size product to a larger product with the dimensions of, for example, a French loaf, that is to say with a length of 40 - 60 cm. In principle, it is even possible to produce the product as an endless product and to provide ready-to-use portions by cutting into sections. Such a continuous product can, for example, be produced using a steel belt oven.

However, the use of a product obtained in this way is relatively limited.

The aim of the invention is to provide a product that is more attractive to consumers.

This aim is achieved with a product having the features of claim 1. According to the present invention the product, such as a roll, becomes more attractive to consumers as a result of the presence of a central opening.

This central opening can be produced in various ways. In a first variant, the bottom of the baking tin is provided with a projection.

Such a projection can, for example, be made in the shape of a peaked roof Although it is possible in principle to press an amount of dough material over such a peak in the undulating shape, it is preferred to work with a dough strand that is placed around such a projection. In particular, use is made of two dough strands that are placed on either side of the projection and gradually overlap one another close to the ends. Because the dough used will in general be relatively soft, a continuous baked product that extends above the top of the projection can finally be obtained.

According to another variant, a baking tin is used in which a smaller tin is placed in the cavity concerned after a layer of dough has first been placed on the bottom of the baking tin. When the dough rises and encloses the position of the small tin the dough is forced to move between the inner circumference of the baking tin, or the cavity, respectively, and the outside of the small tin, as a result of which a product with the desired shape and cavity is produced.

The invention also relates to a baking tin having the features of claim 4. The grating is also used by means of which the container is covered. The grating ensures that, for example, a product such as bread acquires a crusty surface with undulations on rising. The grating forces the surface of the rising bread dough into an undulating shape, which ultimately will form the bottom surface of the finished product, such that the undulating shape is on both sides.

The product described above can be produced using methods known in the state of the art. When producing products with a cavity intended to receive a wide variety of types of fillings, such as the abovementioned sweet or savoury fillings, and more particularly fish, chicken and similar fillings, the starting point is a baking tin in which, in addition to the undulating shape described above, there is also a projection that corresponds to the shape of the cavity to be produced.

According to the present invention a cavity in the body is obtained by suitable interaction of the rising dough and a protruding part or small tin placed in the cavity in the baking tin. In this context the dough can be any dough known in the state of the art provided with any known additive. When the dough rises, which preferably will take place with heating, the rising dough will reach the closure for the tin, which closure is preferably the bar grating described above.

The invention will be explained in more detail below with reference to an illustrative embodiment shown in the figures.
Fig. 1 shows an edible product according to the invention in the form of a roll or bun,
Fig. 2 shows a combination of a baking tin with a grating,
Figs 3 a - c show a grating shown in Fig. 2 in section with small tins,
Fig. 4 shows a plan view of an alternative baking tin for the production of the product according to the invention;
Fig. 5 shows a cross-section along the line V-V in Fig. 1 and;
Fig. 6 shows the cross-section according to Fig. 5 after introducing a filling.

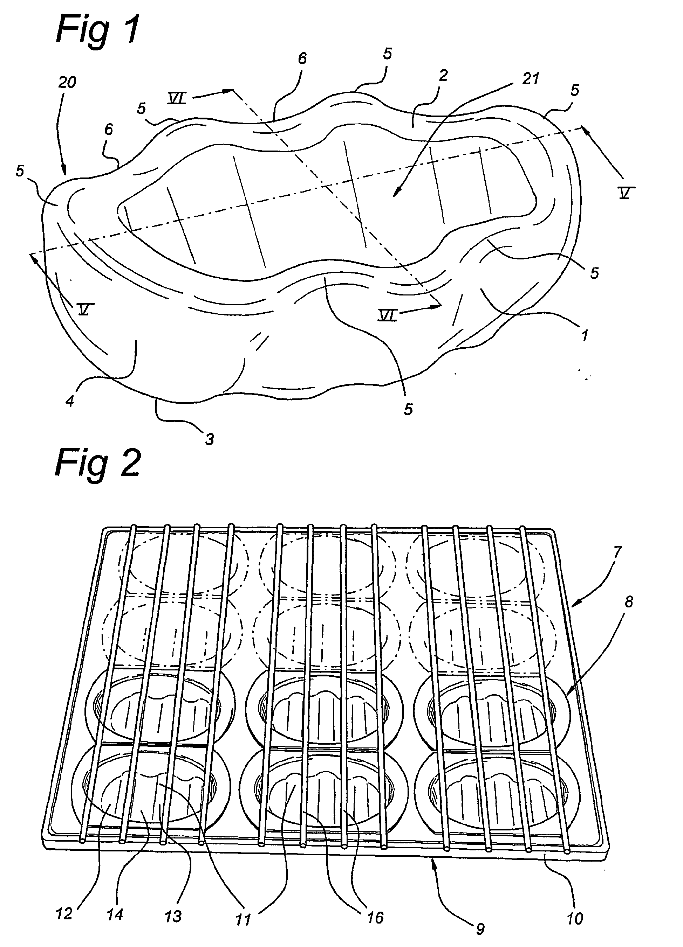

The edible product shown in Fig. 1, which is a roll 20, has a crusty surface 1 with a top 2, a bottom 3 and a periphery 4. According to the invention the top 2 of the roll is provided with four peaks 5 and three troughs 6 located between them. The total surface area of the product, and in particular the crusty surface, is consequently relatively large, which is appreciated by the consumer. There is a central opening 21 for accommodating a filling.

Although four peaks 5 and three troughs 6 are shown in the embodiment in Fig. 1, other numbers of peaks and troughs can also be used and it is also possible to provide the top 2 with more troughs than peaks. The same applies for the bottom 3.

The product shown in Fig. 1 is baked with the combination 7 as shown in Fig. 2. The combination 7 comprises a baking tin 8 and a grating 9 placed thereon. The grating 9 has a peripheral edge 10 that drops round the entire periphery of the baking tin 8, such that the whole bears on one another such that it is not able to shift.

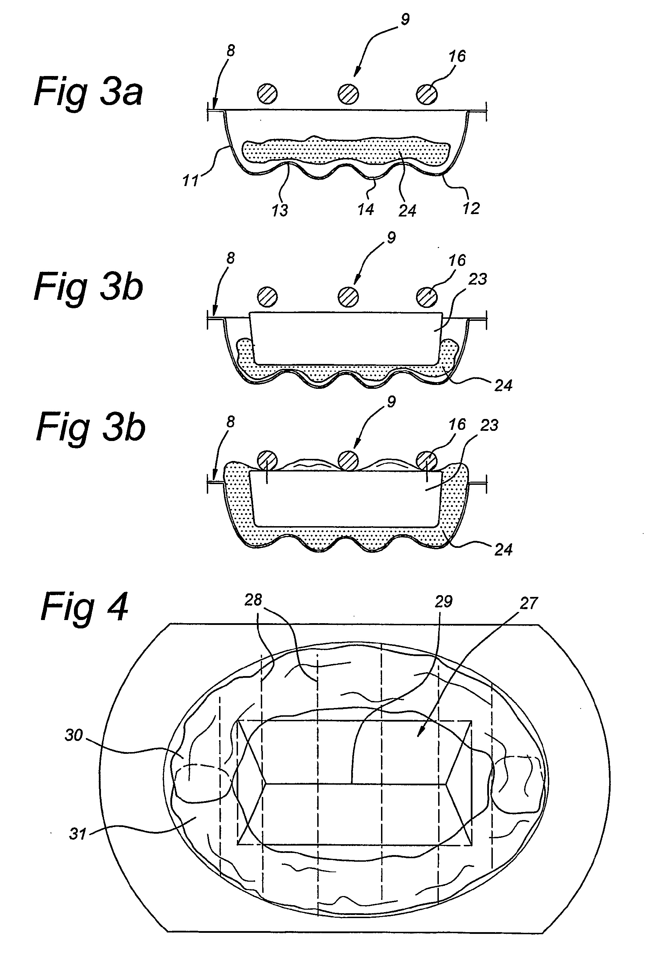

The baking tin 8 has a number of cups 11, with a bottom 12 that has peaks 13 and troughs 14. Small tins 23 can be placed in the cups 11, so that the construction according to Fig. 3 is produced.

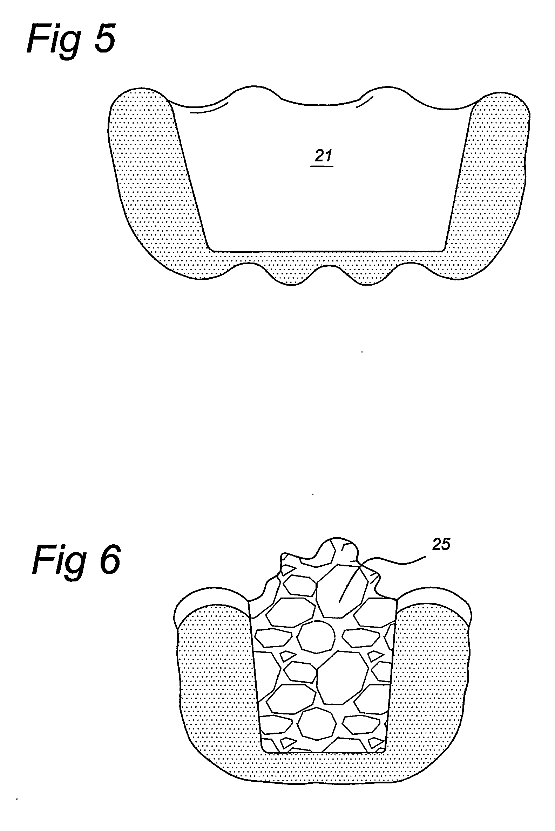

When producing a roll or bun a slice of dough 24 is first placed on the bottom of a cup 11 in baking tin 8 (Fig. 3 a). The small tray (23) is then introduced, followed by fitting the grating 9. During subsequent heating the yeast dough 24 will want to expand, but is restricted by the presence of the small tray 23 (Fig. 3 b). On heating, the dough 24 will then rise and come into contact with the bars 16 of the grating, which delimits the final shape thereof (see also Fig. 2 and Fig. 3 c). The shape shown in Fig. 5 is produced as a result. A filling 25 can then be introduced into the cavity produced in this way, as is shown in Fig. 6. When it moves past the small tin 23 during rising of the dough, the latter comes into contact with the bars 16 of the grating. As a result the top of the product acquires an undulating shape that can be parallel to the other undulations on the bottom. The rising dough is forced into an undulating shape by the bars 16, such that the undulated top 2 according to Fig. 1 is obtained.

The peaks 13 and troughs 14 in the bottom of the cups 11 provide the product with its characteristic undulating shape as shown in Fig. 1.

A plan view of an alternative tin 27 is shown highly diagrammatically in Fig. 4. The undulations are indicated by 28 and a projection extending from the bottom of the tin is indicated by 29. Two dough strands 30 and 31, which have been placed on either side of the projection 29, are also shown in Fig. 4. The tin shown on the basis of Fig. 4 is closed off by the bar grating in the manner shown in Fig. 2 and the product is then prepared. During this preparation the product shown in Figs 5 and 6 will be produced, the opening being precisely in the opposite side. By using a special dough recipe it is possible that during rising the strands 30 and 31 extend to above (in Fig. 6) the projection 29 and come together over the top thereof, as a result of which the bottom of the product shown in Figs 4 - 6 is produced. Enclosure is effected with the aid of the grating shown in Fig. 2. As a result of the use of this grating a further undulating effect is obtained on the other side of the roll and the crustiness of the product increases. Moreover, penetration of heat into the dough product is promoted.

The shape and size of the small tin 23 or the projection 29 can be determined depending on the type of filling and the wishes of the user.

By way of example a product is mentioned here where the peripheral edge around the cavity produced by the projection 29 has a width of approximately 1.3 cm at the free top end. For a "wave height" of approximately 1 cm the additional depth (or height) that is obtained with the small tin or projection 29 is approximately 1.5 cm. That is to say, a roll with a total height of approximately 4 cm at the peaks 25 has a height of approximately 3 cm at the troughs 26 and the base of the receptacle has a height of approximately 1.5 cm for receiving a filling that is not shown.

It is also possible, in a manner that is not shown, continuously to produce a roll provided with undulations. With this procedure the strand is cut, after baking, into portions that are suitable for consumption. The technique of the continuous production of bread products is known in the state of the art. However, it is necessary to make modifications so that the undulating shape, can be produced.

Although the invention has been described above with reference to preferred embodiments, it will be understood from the number of variants that further variants are possible which are immediately obvious to those skilled in the art after reading the above description, which variants fall within the scope of the appended claims.

## Claims

1. Edible product, comprising a body consisting of an edible material, being bread, said body having a crusty surface (1) that has been obtained by heating, said surface (1) comprising a bottom (3), periphery (4) and a top (2), said top having an undulating shape (25, 26) delimited by the shape of a bar grating wherein the body is prepared from dough and provided with a central cavity (21), having an opening and with a filling (25) introduced therein after the cavity has been produced.

2. Edible product according to claim 1, wherein the lateral boundary walls of said central cavity are essentially smooth.

3. Edible product according to one of the preceding claims, wherein the central cavity (21) tapers outwards towards the opening thereof.

4. Baking tin combination for preparing an edible product comprising a body consisting of an edible material, such as bread and the like, said body having a crusty surface (1) that has been obtained by heating, said surface (1) comprising a bottom (3), periphery (4) and a top (2), said top having an undulating shape (25, 26) wherein the body is prepared from dough and provided with a central cavity (21), having an opening and with a filling (25) introduced therein after the cavity has been produced comprising a container (11) for a material to be heated, such as dough, which container (11) has a peripheral wall as well as a base (12), a small tray (23) to be placed in said container and with a size smaller than said container in order to delimit a cavity in the product to be made, as well as a closure provided with an undulating shape for said container and said small tray, wherein said closure comprises a bar grating (9) for realizing said undulating shape.

5. Method for the production of an edible product, comprising a body consisting of an edible material, such as bread and the like, said body having a crusty surface (1) that has been obtained by heating, said surface (1) comprising a bottom (3), periphery (4) and a top (2), said top having an undulating shape (25, 26) wherein the body is prepared from dough and provided with a central cavity (21), having an opening and with a filling (25) introduced therein after the cavity has been produced comprising the provision of a body of edible material with a central cavity and introducing an edible filling into said cavity, wherein the provision of said body comprises placing dough in a baking tin and making it rise, wherein an element forming said cavity is arranged centrally in said baking tin and wherein such an amount of dough is used that on rising this dough moves between said element and the boundary of said cavity, **characterized in that** after arrangement of said element a closure is provided on said tin wherein the dough during heating expands and reaches the closure, wherein said closure comprising a bar grating.

6. Method according to Claim 5, wherein the element comprises a projection (29) and a strand of dough (30, 31) is placed on either side of said projection.

7. Method according to Claim 6, wherein dough material is placed on the bottom of the baking tin, the element comprises a small tray that is placed on the dough material, followed by heating the combination thus obtained.

## Patentansprüche

1. Essbares Erzeugnis, das eine Masse umfasst, die aus einem essbaren Material, bei dem es sich um Brot handelt, besteht, wobei die Masse eine krustige Oberfläche (1) hat, die durch Erhitzen erzielt wurde, wobei die Oberfläche (1) eine Unterseite (3), einen Umfang (4) und eine Oberseite (2) umfasst, wobei die Oberseite eine durch die Form eines Gitterrosts abgegrenzte wellige Form (25, 26) hat, wobei die Masse aus Teig hergestellt und mit einem zentralen Hohlraum (21) mit einer Öffnung versehen ist, und wobei eine Füllung (25) in diesen eingebracht wird, nachdem der Hohlraum hergestellt wurde.

2. Essbares Erzeugnis nach Anspruch 1, wobei die seitlichen Begrenzungswände des zentralen Hohlraums im Wesentlichen glatt sind.

3. Essbares Erzeugnis nach einem der vorhergehenden Ansprüche, wobei sich der zentrale Hohlraum (21) nach außen zu seiner Öffnung hin verjüngt.

4. Backformkombination zur Herstellung eines essbaren Erzeugnisses, das eine Masse umfasst, die aus einem essbaren Material wie etwa Brot u. dgl. besteht, wobei die Masse eine krustige Oberfläche (1) hat, die durch Erhitzen erzielt wurde, wobei die Oberfläche (1) eine Unterseite (3), einen Umfang (4) und eine Oberseite (2) umfasst, wobei die Oberseite eine wellige Form (25, 26) hat, wobei die Masse aus Teig hergestellt und mit einem zentralen Hohlraum (21) mit einer Öffnung versehen ist, und wobei eine Füllung (25) in diesen eingebracht wird, nachdem der Hohlraum hergestellt wurde, einen Behälter (11) für ein zu erhitzendes Material wie etwa Teig umfassend, welcher Behälter (11) eine Umfangswand sowie eine Basis (12), einen kleinen Einsatz (23), der in den Behälter einzusetzen und von der Größe her kleiner ist als der Behälter, um einen Hohlraum in dem herzustellenden Erzeugnis abzugrenzen, sowie eine mit einer welligen Form versehene Abdeckung für den Behälter und den kleinen Einsatz hat, wobei die Abdeckung einen Gitterrost (9) aufweist, um die wellige Form auszubilden.

5. Verfahren zur Herstellung eines essbaren Erzeugnisses, das eine Masse umfasst, die aus einem essbaren Material wie etwa Brot u. dgl. besteht, wobei die Masse eine krustige Oberfläche (1) hat, die durch Erhitzen erzielt wurde, wobei die Oberfläche (1) eine Unterseite (3), einen Umfang (4) und eine Oberseite (2) umfasst, wobei die Oberseite eine wellige Form (25, 26) hat, wobei die Masse aus Teig hergestellt und mit einem zentralen Hohlraum (21) mit einer Öffnung versehen ist, und wobei eine Füllung (25) in diesen eingebracht wird, nachdem der Hohlraum hergestellt wurde, die Bereitstellung der Masse aus essbarem Material mit einem zentralen Hohlraum und das Einbringen einer essbaren Füllung in den Hohlraum umfassend, wobei die Bereitstellung der Masse umfasst, Teig in eine Backform einzusetzen und ihn gehen zu lassen, wobei ein den Hohlraum bildendes Element mittig in der Backform angeordnet wird, und wobei Teig in einer solchen Menge verwendet wird, dass sich dieser Teig beim Gehen zwischen das Element und die Begrenzung des Hohlraums bewegt, **dadurch gekennzeichnet, dass** nach dem Anordnen des Elements eine Abdeckung auf der Form vorgesehen wird, wobei sich der Teig während des Erhitzens ausdehnt und die Abdeckung erreicht, wobei die Abdeckung einen Gitterrost umfasst.

6. Verfahren nach Anspruch 5, wobei das Element einen Vorsprung (29) aufweist und ein Teigstrang (30, 31) auf jeder Seite des Vorsprungs angeordnet wird.

7. Verfahren nach Anspruch 6, wobei Teigmaterial auf dem Boden der Backform angeordnet wird, das Element einen kleinen Einsatz umfasst, der auf das Teigmaterial gesetzt wird, woraufhin die so erhaltene Kombination erhitzt wird.

## Revendications

1. Produit comestible, comprenant un corps constitué d'un matériau comestible, etant du pain, ledit corps comportant une surface croûtée (1) qui a été obtenue par chauffage, ladite surface (1) comprenant une partie inférieure (3), une périphérie (4) et une partie supérieure (2), ladite partie supérieure présentant une forme ondulée (25, 26) délimitée par la forme d'une grille à barres, dans lequel le corps est préparé à partir de pâte et pourvu d'une cavité centrale (21), comportant une ouverture, et d'une garniture (25) introduite dans celle-ci après que la cavité a été produite.

2. Produit comestible selon la revendication 1, dans lequel les parois de limite latérales de ladite cavité centrale sont essentiellement lisses.

3. Produit comestible selon l'une des revendications précédentes, dans lequel la cavité centrale (21) est effilée vers l'extérieur vers l'ouverture de celle-ci.

4. Association de moule pour préparer un produit comestible comprenant un corps constitué d'un matériau comestible, tel que du pain et analogue, ledit corps comportant une surface croûtée (1) qui a été obtenue par chauffage, ladite surface (1) comprenant une partie inférieure (3), une périphérie (4) et une partie supérieure (2), ladite partie supérieure présentant une forme ondulée (25, 26), dans laquelle le corps est préparé à partir de pâte et pourvu d'une cavité centrale (21), comportant une ouverture, et d'une garniture (25) introduite dans celle-ci après que la cavité a été produite, comprenant un récipient (11) pour un matériau destiné à être chauffé, tel que de la pâte, lequel récipient (11) comporte une paroi périphérique ainsi qu'une base (12), un plateau de petite taille (23) destiné à être placé dans ledit récipient et avec une taille inférieure à celle dudit récipient afin de délimiter une cavité dans le produit destiné à être réalisé, ainsi qu'une fermeture pourvue d'une forme ondulée pour ledit récipient et ledit plateau de petite taille, dans laquelle ladite fermeture comprend une grille à barres (9) pour réaliser ladite forme ondulée.

5. Procédé pour la fabrication d'un produit comestible, comprenant un corps constitué d'un matériau comestible, tel que du pain et analogue, ledit corps comportant une surface croûtée (1) qui a été obtenue par chauffage, ladite surface (1) comprenant une partie inférieure (3), une périphérie (4) et une partie supérieure (2), ladite partie supérieure présentant une forme ondulée (25, 26), dans lequel le corps est préparé à partir de pâte et pourvu d'une cavité centrale (21), comportant une ouverture, et d'une garniture (25) introduite dans celle-ci après que la cavité a été produite, comprenant les étapes consistant à fournir un corps de matériau comestible avec une cavité centrale et introduire une garniture comestible dans ladite cavité, dans lequel l'étape consistant à fournir ledit corps comprend les étapes consistant à placer de la pâte dans un moule et la faire lever, dans lequel un élément formant ladite cavité est agencé de façon centrale dans ledit moule et dans lequel une quantité de pâte est utilisée de sorte que, lorsqu'elle lève, cette pâte se déplace entre ledit élément et la limite de ladite cavité, **caractérisé en ce que,** après l'agencement dudit élément, une fermeture est prévue sur ledit moule, dans lequel la pâte, au cours du chauffage, se dilate et atteint la fermeture, dans lequel ladite fermeture comprend une grille à barres.

6. Procédé selon la revendication 5, dans lequel l'élément comprend une saillie (29) et un fil de pâte (30, 31) est placé sur chaque côté de ladite saillie.

7. Procédé selon la revendication 6, dans lequel un matériau de pâte est placé sur le fond du moule, l'élément comprend un plateau de petite taille qui est placé sur le matériau de pâte, et l'association ainsi obtenue et ensuite chauffée.
